(19) Europäisches Patentamt
European Patent Office
Office européen des brevets

(11) **EP 3 193 304 A1**

(12) **EUROPEAN PATENT APPLICATION**
published in accordance with Art. 153(4) EPC

(43) Date of publication:
**19.07.2017 Bulletin 2017/29**

(51) Int Cl.:
**G06Q 50/06** (2012.01)   **H02J 3/32** (2006.01)

(21) Application number: **15839620.0**

(22) Date of filing: **02.07.2015**

(86) International application number:
**PCT/JP2015/069116**

(87) International publication number:
**WO 2016/038993 (17.03.2016 Gazette 2016/11)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **11.09.2014 JP 2014185351**

(71) Applicant: **Kabushiki Kaisha Toshiba**
**Minato-ku**
**Tokyo 105-8001 (JP)**

(72) Inventors:
• **SAITO, Masaaki**
**Tokyo 105-8001 (JP)**
• **IINO, Yutaka**
**Tokyo 105-8001 (JP)**
• **MURAYAMA, Dai**
**Tokyo 105-8001 (JP)**

(74) Representative: **Moreland, David**
**Marks & Clerk LLP**
**Aurora**
**120 Bothwell Street**
**Glasgow G2 7JS (GB)**

(54) **DEVICE OPERATION SETTING VALUE DETERMINATION APPARATUS, DEVICE OPERATION SETTING VALUE DETERMINATION METHOD, AND DEVICE OPERATION SETTING VALUE DETERMINATION PROGRAM**

(57) A device operation setting value determination apparatus of an embodiment has a forecaster, a margin determining unit, and a schedule determining unit. The forecaster forecasts an energy amount consumed by or supplied to a device. The margin determining unit determines a margin of the forecast value of energy amount as a margin for bidding a negawatt amount. The margin determining unit appends the determined margin to the forecast value of the energy amount. The schedule determining unit determines a setting value that establishes operation of the device, based on the forecast value of the energy amount to which the margin has been appended, device energy characteristics, and an incentive unit amount in a demand response.

FIG. 3

**Description**

[Field of Art]

Embodiments of the present invention relate to a device operation setting value determination apparatus, a device operation setting value determining method, and a device operation setting value determining program.

[Background Art]

A consumer receives an incentive if the amount of electric power that becomes surplus because of savings by the consumer achieves the bid negawatts in a negawatt bid transaction during a demand response target time of day. However, a conventional apparatus sometimes has been unable to reach the negawatt amount bid in a negawatt transaction.

[Prior Art Reference]

[Patent Reference]

[Patent Reference 1]: Japanese Patent Application Publication 2014-9824

[Summary of the Invention]

[Problem to Be Solved by the Invention]

The problem to be solved by the present invention is to provide a device operation setting value determination apparatus, a device operation setting value determining method, and a device operation setting value determining program capable of improving the probability of reaching the negawatt amount bid in a negawatt transaction.

[Means to Solve the Problem]

A device operation setting value determination apparatus of an embodiment has a forecaster, a margin determining unit, and a schedule determining unit. The forecaster forecasts an amount of energy consumed by or supplied to a device. The margin determining unit determines a margin of the forecast value of energy as a margin for bidding a negawatt amount. The margin determining unit appends the determined margin to the forecast value of the energy amount. The schedule determining unit determines a setting value that establishes operation of the device, based on the forecast value of the energy amount to which the margin has been appended, the device energy characteristics, and the incentive unit amount in a demand response.

[Brief Description of the Drawings]

FIG. 1 shows a control system in a first embodiment.
FIG. 2 shows a controlled device in the first embodiment.
FIG. 3 shows a bidding control system in the first embodiment.
FIG. 4 shows the fluctuation of received electrical energy amount.
FIG. 5 shows the operation of a device operation setting value determination apparatus in the first embodiment.
FIG. 6 shows the margin setting screen in the first embodiment.
FIG. 7 shows the variables that are optimized in the first embodiment.
FIG. 8 shows the change in the incentive unit amount in the first embodiment.
FIG. 9 shows the screen for verifying the bidding conditions in the first embodiment.
FIG. 10 shows the margin setting screen in a second embodiment.
FIG. 11 shows the bidding control system in a third embodiment.
FIG. 12 shows the operation of the device operation setting value determination apparatus in the third embodiment.
FIG. 13 shows the screen for verifying the bidding condition in the third embodiment.

[Embodiments]

A device operation setting value determination apparatus, a device operation setting value determining method, and a device operation setting value determining program of embodiments will be described below, with references made to the drawings.

(First Embodiment)

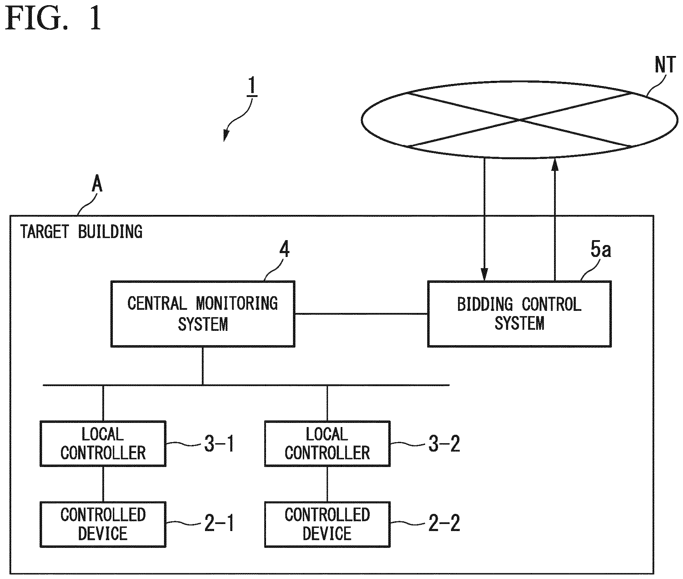

FIG. 1 shows a control system 1 of the first embodiment. The control system 1 has a controlled device 2, a local controller 3, a central monitoring system 4, and a bidding control system 5a. In FIG. 1, the controlled device 2, the local controller 3, the central monitoring system 4, and the bidding control system 5a are provided in the target building A.
The controlled device 2 includes at least one of an energy-consuming device, an energy-supplying device, and an energy-storing device. An energy-consuming device, an energy-supplying device, and an energy-storing device may be a device that serves as two or more thereof.
An energy-consuming device consumes supplied energy. An energy-consuming device is, for example, air-conditioning equipment (an air-conditioner), a lighting device, or a heat-sourcing device.
An energy-supplying device supplies energy to an energy-consuming device or an energy-storing device. An energy-supplying device, for example, is a photovoltaic (PV) apparatus, a solar water heater, a co-generation system (CGS), an electric freezer, or an absorption-type water heating/cooling machine.
An energy-storing device stores supplied energy and is, for example, a storage battery or heat storage tank.
The local controller 3 communicates with the controlled device 2. The local controller 3 controls the operation of the controlled device 2, based on an operation schedule. The local controller 3, for example, controls the output level and the starting and stopping (start/stop) of the controlled device 2. The local controller 3 may be provided in each the controlled device 2. The local controller 3 may perform group control of a plurality of controlled devices 2.
The central monitoring system 4 transmits to the bidding control system 5a process data acquired from the local controller 3. Process data is information that changes with the elapse of time. The bidding control system 5a acquires process data from the central monitoring system 4. The process data is, for example, meteorological data or operation data. Meteorological data includes past meteorological data and weather forecast data. Operation data includes past setting values for each controlled device 2, information representing state quantities of each controlled device 2 when an operation schedule is executed, and information representing failures.
Information representing state quantities of each controlled device 2 when an operation schedule is executed includes information representing the energy amount consumed by the controlled devices 2 and information representing the energy produced by the controlled devices 2. For example, the state quantities for each controlled device 2 include information representing the output and load rate of the energy-supplying devices. Also, for example, the state quantities for each controlled device 2 include the discharging amount or heat storage amount of an energy-storing device.
The bidding control system 5a controls the negawatt amount bidding in negawatt transactions. The bidding control system 5a acquires meteorological data via the communication network NT. The bidding control system 5a acquires baseline information via the communication network NT.
The baseline is the threshold of the electrical energy used that serves as the criterion of whether or not to grant an incentive. The baseline is numerically assessed based on the amount of electrical energy used over some past period of time by a consumer that has a controlled device 2. For example, the baseline is numerically assessed based on the actual value of the amount of electrical energy used in the target building A in a past period of a number of days or number of weeks. In the following, as an example, the case in which the baseline is set in units of days and the baseline is constant over that one day.
The bidding control system 5a optimizes the operation schedule of the controlled device 2 based on, for example, setting values (setting parameters), process data, the time of day targeted for demand response (hereinafter "DR target time"), and baseline information. The DR target time is the time of the day for seeking to reduce the electrical energy used by means of a demand response. In the DR target time, the electricity unit price may be increased. If a consumer is able to reduce the amount of energy used in the DR target time, the user can receive an incentive.
The bidding control system 5a transmits the incentive unit amount information in the demand response and the negawatt amount information to an apparatus (not shown) that issues a demand response signal, via the communication network NT. The incentive unit amount is the unit amount for calculating the incentive amount. The incentive amount is the amount of reduction from the amount of energy used that is subject to energy usage fees, multiplied by the incentive unit amount. The incentive use amount is expressed in units such as (yen/kW) or (yen/kWh).
The energy that is subject to energy usage fees is energy for which a usage fee is to be paid. Energy for which a usage fee is paid is, for example, electricity, gas, or water. For that reason, the energy usage fees include electricity fees, gas fees, and water fees. The energy usage fee for which incentives are applicable may be the electricity fee, or may be an energy usage fee other than the electricity fee.

The operation schedule is a schedule of the operation of a controlled device 2 over some period of time in the future. The operation schedule is established for each controlled device 2 and for each time of the day. The operation schedule includes information that represents from what time to what time a controlled device 2 is to be started and stopped. If there are a plurality of controlled devices 2, the operation schedule includes information representing how many thereof are to be started from what time to what time. The operation schedule includes information representing the output level of the controlled devices 2.

The operation schedule includes, for example setting values that can be expressed as units of amounts or quantities (for example kW or kWh). A setting value is the value of a parameter that determines the operation state for each of the controlled devices 2. A setting value, for example, is the value of a parameter that determines the luminance of a lighting device as an energy-consuming device.

For example, in an air-conditioner as an energy-consuming device, a setting value is the temperature setting value or predicted median vote (PMV) setting value. The predicted mean vote setting value is established by ISO 7730, as a heat index for air-conditioners. The predicted mean vote is an index that is a quantitative representation of the manner in which a human's sense cold. A zero value of the predicted mean vote represents a human feeling comfortable. Negative values of the predicted mean vote represent a human feeling cold, and positive values of the predicted mean vote represent a human feeling warm. The parameters used in calculating the predicted mean vote are temperature, humidity, mean radiation temperature, amount of clothing worn, amount of activity, and wind speed and the like.

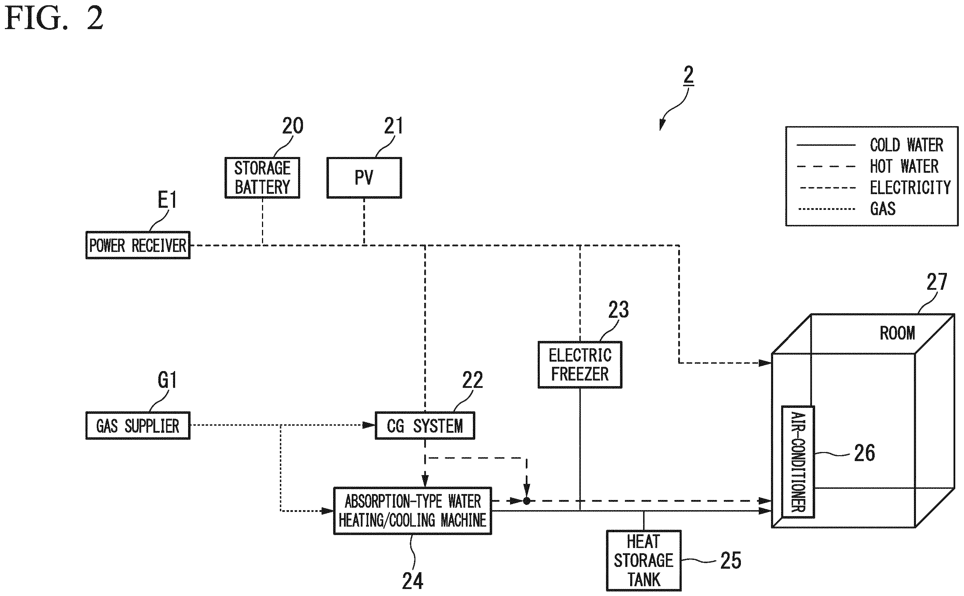

FIG. 2 shows controlled devices 2 in the first embodiment. The controlled devices 2 shown as examples are a storage battery 20, a photovoltaic apparatus 21, a CG system 22 (co-generation system), an electric freezer 23, an absorption-type water heating/cooling machine 24, a heat storage tank 25, and an air conditioner 26. The controlled devices 2 may also have a heat-pump/chiller (heat-pump freezer), or a solar water heater or the like.

The controlled devices 2 supply to the air conditioner 26 and the like installed in the room 27 electrical energy, cold, and heat, which are produced using the electrical energy received at the power receiver E1 and the gas supplied by the gas supplier G1.

The power receiver E1 supplies electrical energy received from the electric power grid to the energy-consuming devices of the controlled devices 2. The power receiver E1 can store electrical energy received from the electric power grid in the storage battery 20.

The gas supplier G1 supplies gas acquired from a gas supply grid to the CG system 22 and the absorption-type water heating/cooling machine 24.

The storage battery 20 has a secondary battery that can be both be charged and discharged.

The photovoltaic apparatus 21 is an electricity-generating device. The photovoltaic apparatus 21 has a solar panel for converting sunlight to electrical energy. The amount of electrical energy supplied by the photovoltaic apparatus 21 varies, depending upon meteorological conditions such as the weather. The electrical energy generated by the photovoltaic apparatus 21 is stored in the storage battery 20 and is supplied to the energy-consuming devices of the controlled devices 2.

The CG system 22 generates electricity by an internal combustion engine or an external combustion engine. The CG system 22 can use the heat exhausted from the internal combustion engine or external combustion engine. In FIG. 2, the CG system 22 generates electricity using gas as an energy source. The CG system 22 may be a fuel cell. The electrical energy generated by the CG system 22 is stored in the storage battery 20. The electrical energy generated by the CG system 22 is supplied to energy-consuming devices of the controlled devices 2.

The electric freezer 23 can produce cold by a process of compressing, condensing, and then vaporizing a refrigerant. The electric freezer 23 has a motorized compressor for compressing the refrigerant. The electric freezer 23 consumes electrical energy supplied to the energy-consuming device of the controlled device 2 and produces heat. The electric freezer 23 may store the produced heart in the heat storage tank 25. The electric freezer 23 may supply the produced heat to the air-conditioner 26 installed in the room 27.

The absorption-type water heating/cooling machine 24 is a device that, by having a reconstituting process that absorbs steam and sources heat between the refrigerant compressor and a vaporizer, supplies cold water or hot water. The absorption-type water heating/cooling machine 24 uses gas supplied form the gas supplier G1 or the exhaust heat supplied from the CG system 22 as a heat energy source.

The absorption-type water heating/cooling machine 24 can use the heat produced by the CG system 222 to produce cold. The absorption-type water heating/cooling machine 24 uses a gas to increase the amount of cold produced. The absorption-type water heating/cooling machine 24 may store the cold it produces in the heat storage tank 25. The absorption-type water heating/cooling machine 24 may supply the cold is produces to an air conditioner 26 installed in the room 27.

The heat storage tank 25 stores heat by means of an accumulated heating medium.

The air conditioner 26 is air-conditioning equipment. The air conditioner 26 uses supplied cold that air-condition the room 27. The air-conditioner 26 obtains hot water from the CG system 22 and the absorption-type water heating/cooling machine 24 to perform heating. The air-conditioner 26 can obtain hot water or cold water from the electric freezer 23, the absorption-type water heating/cooling machine 24, and the heat storage tank 25.

Setting values (setting parameters) are, for example, an incentive unit amount change increment, an incentive amount upper limit, a weighting coefficient, an evaluation index, or device energy characteristics. The incentive unit amount change increment is a setting value used for iterative computation in the processing to determine and optimize the operation schedule of a controlled device 2. In the same manner, the incentive unit amount change increment is a setting value used for iterative computation in the processing to determine and optimize the operation schedule of a controlled device 2.

A weighting coefficient is a coefficient used in computing the degree of similarity (to be described later).

An evaluation index is expressed as an objective function for the optimization of the energy amount consumed by a controlled device 2, the energy amount supplied by a controlled device 2, or the cost or the like. The objective function is minimized by processing to determine and optimize the operation schedule.

The device energy characteristics are expressed by various setting parameters (values that represent energy characteristics) that establish energy characteristics for each controlled device 2. The setting parameters are, for example, those that determine the heat amount, the rated output, the electrical power upper limit, the electrical power lower limit, and the COP (coefficient of performance). These parameters are used in processing to determine the operation schedule. The COP is a performance coefficient of a heat-sourcing device such as a heat pump. Specifically, the COP is a value that indicates the result of dividing the cooling or heating capacity of a heat-sourcing device by the consumed energy of the heat-sourcing device.

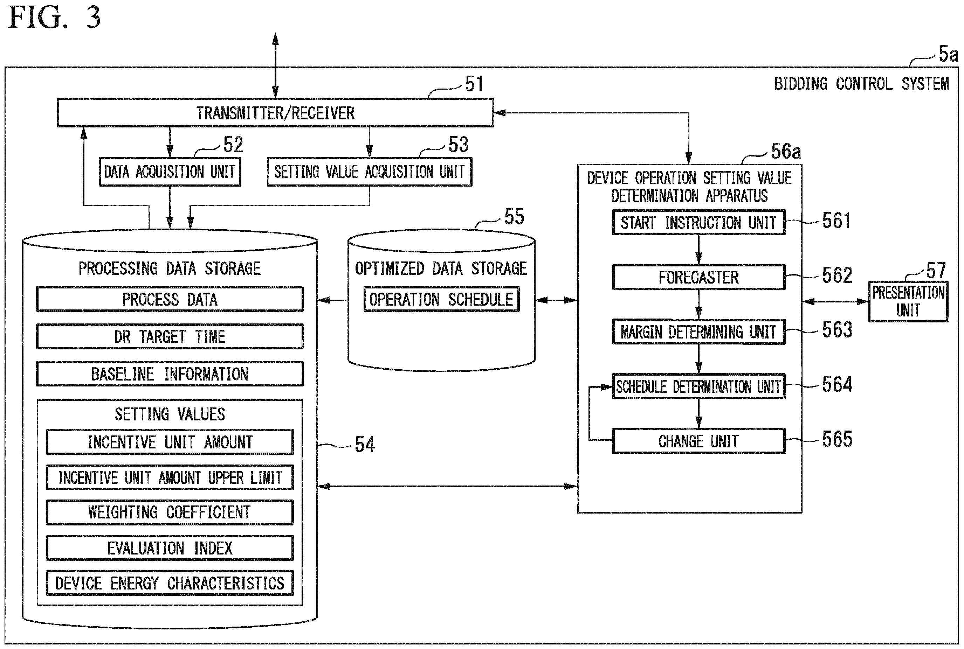

FIG. 3 shows the bidding control system 5a in the first embodiment. The bidding control system 5a has a transmitter/receiver 51, a data acquisition unit 52, a setting value acquisition unit 53, a processing data storage 54, an optimized data storage 55, a device operation setting value determining apparatus 56a, and a presentation unit 57.

The transmitter/receiver 51, via the communication network NT, executes communication with a host system that issues a demand response signal and baseline information. The transmitter/receiver 51, via the communication network NT, receives meteorological data and the like from a server device (not shown). The transmitter/receiver 51 receives process data from the central monitoring system 4. The transmitter/receiver 51 may output, for example, information that represents an operation schedule optimized by the device operation setting value determining apparatus 56a. The transmitter/receiver 51 can transmit various types of data that is stored in the processing data storage 54 and the optimized data storage 55.

The transmitter/receiver 51 may have an operation unit such as a keyboard, a mouse, a touch panel, or a switch or the like. The operation unit accepts an operation made by a user. The operation is an operation that transmits information required for processing by various parts of the bidding control system 5a, information for selection of processing, and instruction information to the bidding control system 5a, via the transmitter/receiver 51. The operation unit may be provided in the data acquisition unit 52 or the setting value acquisition unit 53.

The data acquisition unit 52 acquires data required for processing to be executed by the device operation setting value determination apparatus 56a from the central monitoring system 4. Data required for processing is, for example, process data. The data acquisition unit 52 acquires other data required for processing by the device operation setting value determination apparatus 56a via the communication network NT and the transmitter/receiver 51. The other data required for processing is, for example, information representing the DR target time and baseline information.

The setting value acquisition unit 53 acquires information representing setting values (setting parameters) required for processing executed by the device operation setting value determination apparatus 56a from the central monitoring system 4 and the like. The information representing setting values is, for example, information representing the incentive unit amount change increment, information representing the upper limit of the incentive unit amount, information representing the weighting coefficient, information representing the evaluation index, and information representing energy characteristics of the controlled device 2.

The processing data storage 54 acquires various data from the data acquisition unit 52 or the setting value acquisition unit 53. The processing data storage 54 stores data required in the processing executed by the device operation setting value determination apparatus 56a. The processing data storage 54 stores, for example, process data, information representing the DR target time, and information representing the baseline. The processing data storage 54, for example, stores as information representing setting values process data, information representing the DR target time, baseline information, information representing the incentive unit amount change increment, information representing the incentive unit amount upper limit, information representing the weighting coefficient, information representing the evaluation index, and information representing device energy characteristics.

The optimized data storage 55 stores information representing the operation schedule that has been optimized by the device operation setting value determination apparatus 56a. The optimized data storage 55 may store various data used in operation schedule optimization processing by the device operation setting value determination apparatus 56a.

The device operation setting value determination apparatus has a start instruction unit 561, a forecaster 562, a margin determining unit 563, a schedule determining unit 564, and a change unit 565.

The start instruction unit 561 outputs a trigger signal that instructs the start of optimization processing to the forecaster 562 at a pre-established timing. If operation schedule optimization is to be done on the day before the operation schedule is to be executed, this timing is, for example, the same time each day. The interval in days between output by the start instruction unit 561 of the trigger signal can be arbitrarily set. What time the trigger signal is output by the start instruction unit 561 can be arbitrarily set. If the operation schedule is to be optimized on the day that the operation schedule is optimized, the start instruction unit 561 may output the trigger signal at a fixed period shorter than 24 hours.

If it receives the trigger signal from the start instruction unit 561, the forecaster 562 forecasts the energy amount consumed by or supplied to the controlled device 2.

The margin determining unit 563, based on the energy amount consumed or supplied forecast by the forecaster 562, determines the margins for making a negawatt bit. The margins for making a negawatt bid are, for example, the margin of the forecast value of the energy amount consumed by or supplied to the controlled device 2, the margin of the setting value that establishes operation of the controlled device 2, and the margin of the value representing energy characteristics of the controlled device 2. The details of these margins will be described later. The margin determining unit 563 determines the margins so that the energy that becomes surplus of the energy consumed by or supplied to the controlled device 2 reaches the negawatt amount that had been bid. The margin determining unit 563 may determine the plurality of margins in accordance with the request level of the demand response.

The schedule determining unit 564 determines the setting values that establish the operation of the controlled device 2 and optimize the settings that determine the operation. That is, the schedule determining unit optimizes the operation schedule of the controlled device 2. The schedule determining unit 564 optimizes the operation schedule by minimizing the evaluation index determined for the controlled device 2. The evaluation index is, for example, the cost of energy required for operating the controlled device 2.

The schedule determining unit 564, for example, based on the forecast amount of energy forecast by the forecaster 562 and on constraint conditions, determines the values of variables (setting parameters) included in the objective function so as to minimize the objective function that represents the evaluation index. The schedule determining unit 564, based on the electricity fee unit price and the incentive unit amount in the DR target time, optimizes the operation schedule in accordance with the demand response.

The schedule determining unit 564 acquires information representing the changed incentive unit amount from the change unit 565. The schedule determining unit 564, based on the changed incentive unit amount, determines the operation schedule of the controlled device 2 and optimizes the determined operation schedule. That is, schedule determining unit 564 repeats the processing of optimizing the operation schedule. The schedule determining unit 564 optimizes the operation schedule for planned operation to be executed in the future. The optimized operation schedule of the controlled device 2 may be executed, for example, on some day starting on the day after the day of optimization.

The change unit 565 changes the incentive unit amount by the incentive unit amount change increment. The change unit 565 changes the incentive unit amount, based on a pre-established rule. The change unit 565 the changed incentive unit amount (new optimized bid point) to the schedule determining unit 564.

The presentation unit 57 is a display device and a printing device. The presentation unit 57 displays information representing the margins determined by the margin determining unit 563. The presentation unit 57, of a plurality of operation schedules iteratively computed by the schedule determining unit 564, displays on a map the bidding conditions with which the consumer can receive an incentive. The presentation unit 57 displays an information input interface of operating key images or the like, data that is stored in the processing data storage 54, data that is stored in the optimized data storage 55, the incentive unit amount, and processing results and the like. At the consumer, an operator (manager) managing the device operation setting value determination apparatus 56a can reference the information displayed on the presentation unit 57.

The presentation unit 57 may display a variety of operating key images. The operating key images are associated with operating modes of the device operation setting value determination apparatus 56a. An operating mode is, for example, one that gives priority to a high incentive amount (incentive priority mode). An operating mode is, for example, one that gives priority to reliably receiving an incentive (incentive assurance priority mode). An operating mode is, for example, one that is intermediate between the incentive priority mode and the incentive assurance priority mode (normal mode).

The margin determining unit 563 makes the margin values relatively small in the incentive priority mode. The margin determining unit 563 makes the margins relatively large in the incentive assurance priority mode. In the normal mode, the margin determining unit 563 determines the margins as the average values between the margins in the incentive priority mode and the margins in the incentive assurance priority mode.

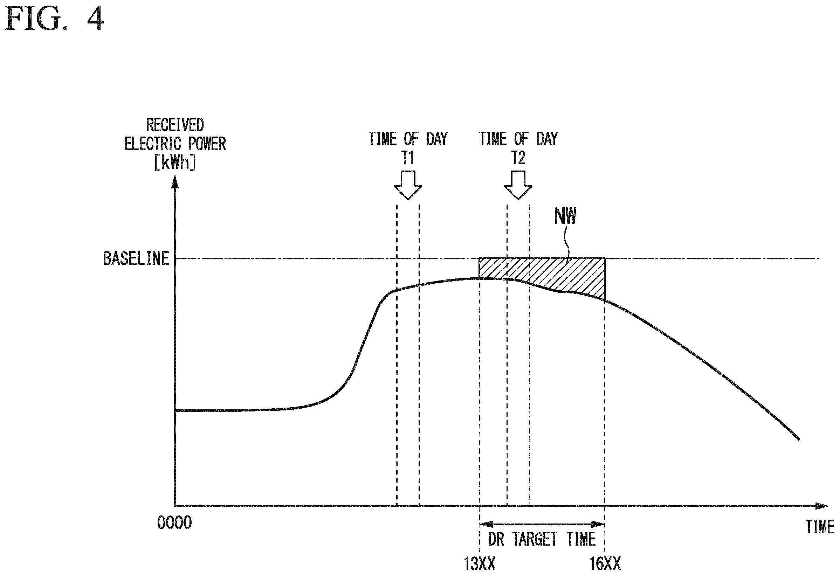

FIG. 4 shows the fluctuation of the receive electrical energy in the first embodiment, in which the vertical axis represents the received electrical energy (kWh) in the target building A of the consumer, and the horizontal axis represents the time included in one day that includes the DR target time. The solid curve in graph represents the received electric energy amount. The baseline is pre-established, based on the actual values of received electrical energy in the past in the target building A. The negawatt amount NW is the received electrical energy amount that is actually lower than the baseline in the DR target time (the electrical energy amount that actually become surplus by savings by the consumer). In a negawatt transaction, the negawatt amount in the DR target time is bid beforehand.

If the actual negawatt amount NW has reached the negawatt amount that has been bid, the consumer can receive an incentive. That is, if the consumer has been able to make savings of the electrical energy used that exceed the bid negawatt amount in the DR target time, the incentive can be received.

In the time period T1 that is not included in the DR target time (in FIG. 4, from 13XX to 16XX) even if the received electrical energy amount is below the baseline, the consumer cannot receive an incentive. In contrast, in the time period T2 that is included in the DR target time, if the received electrical energy amount is below the baseline, the consumer can receive an incentive.

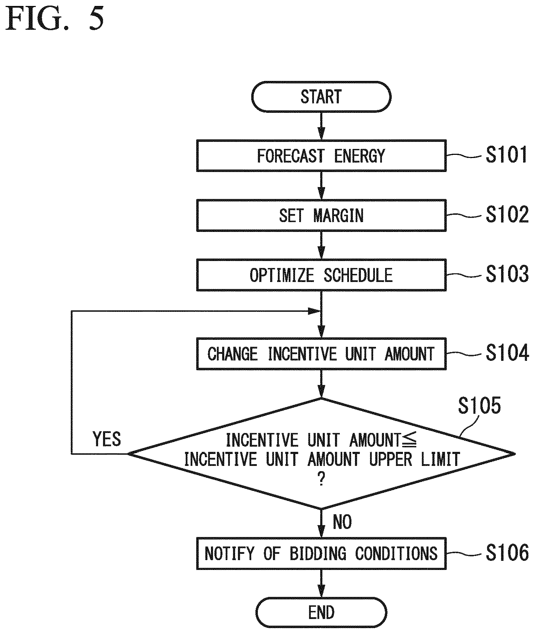

FIG. 5 shows the operation of the device operation setting value determination apparatus in the first embodiment. The start instruction unit 561 outputs a trigger signal that instructs a start to the forecaster 562, at a pre-established timing. For example, the start instruction unit 561 outputs the trigger signal to the forecaster 562 at 2100 on the day before the day of execution of the operation schedule. The operation shown in FIG. 5 is executed at this timing.

The forecaster 562 acquires process data associated with a prescribed past period of time from the processing data storage 54. The acquired data is, for example, meteorological data and operation data. The forecaster 562 forecasts the energy amount consumed by or supplied to the controlled device 2, based on the meteorological data and operation data.

If the meteorological data and operation data is the day of the week, the weather, the temperature, and the humidity for a prescribed past period, the forecaster 562, based on that operation data and operation data, calculates the degree of similarity. The formula for calculating the degree of similarity is, for example, Equation (1).

[Equation 1]

$$\text{Degree of similarity} = |\text{Day of the week}| + |\text{Weather weighting}|$$

$+ z \times |\text{Next day maximum temperature - } TM_i|$
$+ b \times |\text{Next day minimum temperature - } TL_i|$
$+ c \times |\text{Next day relative humidity - } RH_i| \to \min (i=1, 2, 3, ..., n - 1, n)$

In the above, "day of the week weighting" indicates a weighting coefficient pre-established for each day of the week. If the day after the operation schedule is executed is, for example, Tuesday, the "day of the week weighting" indicates the weighting coefficient for that Tuesday. The "weather weighting" indicates a weighting coefficient pre-established for each weather condition. If the weather forecast for the day after the operation schedule is executed is clear, the "weather weighting" indicates the weather weighting for clear.

In the above, a, b, and c are weighting coefficients for various factors (such as temperature and humidity). The next day maximum temperature indicates the maximum temperature forecast for the next day. The next day minimum temperature indicates the minimum temperature forecast for the next day. The next day relative humidity indicates the forecast relative humidity for the next day. The maximum temperature $TM_i$ indicates the maximum temperature associated with the day number i (i = 1 to n) of the date in the past. The minimum temperature $TL_i$ indicates the minimum temperature associated with the day number i of the date in the past. The relative humidity $RH_i$ indicates the relative humidity of the day number i of the date in the past. The day number is a serial number applied in date sequence with respect to mutually associated operation data and meteorological data.

The values of the weighting coefficients a to c are arbitrarily established. For example, if the past meteorological data is "clear" and also the weather the next day is "clear," the weighting coefficient is established to be relatively small. For example, if the past meteorological data is "rain" and also the weather the next day is "clear," the weighting coefficient is established to be relative large. The day of the week weighting, weather weighting, and the weighting coefficients a to c may each be established in accordance with the forecast accuracy of the weather forecast.

The forecaster 562, by a calculation based on Equation (1), calculates the degree of similarity in a past prescribed period of time. The method of the forecaster 562 calculating the similarity in a past prescribed period of time is not restricted to a specific method, and any method may be used.

The forecaster 562 extracts the day number i having the minimum calculated degree of similarity from the day numbers 1 to n. The forecaster 562 establishes the energy amount consumed by or supplied to the controlled device 2 on the past day indicated by the extracted day number i as the forecast value of the energy amount consumed by or supplied to the controlled device 2 on the following day (step S101).

The margin determining unit 563, based on the energy amount that the forecaster 562 forecast as the energy amount consumed or supplied, determines the margin of the forecast value of the energy amount consumed by or supplied to the controlled device 2. The margin determining unit 563, for example, determines the margin of the forecast energy amount consumed by or supplied to the controlled device 2 based on Equations (2) to (5).
[Equation 2]

$$E_{PV}{}^{t} = e_{PV}{}^{t} + MG_{PV}{}^{t} \qquad \cdots (2)$$

$E_{PV}$: Forecast PV generated electricity amount
$e_{PV}$: PV generated electricity amount forecast by the energy forecaster
$MG_{PV}$: Margin of the forecast PV generated electricity amount

[Equation 3]

$$E_{DEMAND}{}^{t} = e_{DEMAND}{}^{t} + MG_{E-DEMAND}{}^{t} \qquad \cdots (3)$$

$E_{DEMAND}$: Forecast consumed electrical energy
$e_{DEMAND}$: Forecast consumed electrical energy forecast by the energy forecaster
$MG_{E-DEMAND}$: Margin of the forecast consumed electrical energy

[Equation 4]

$$HC_{DEMAND}{}^{t} = hc_{DEMAND}{}^{t} + MG_{HC-DEMAND}{}^{t} \quad \cdots (4)$$

$HC_{DEMAND}$: Forecast consumed cold energy
$hc_{DEMAND}$: Forecast consumed cold energy forecast by the energy forecaster
$MG_{HC-DEMAND}$: Margin of the forecast consumed cold energy

[Equation 5]

$$HH_{DEMAND}{}^{t} = hh_{DEMAND}{}^{t} + MG_{HH-DEMAND}{}^{t} \qquad \cdots (5)$$

$HH_{DEMAND}$: Forecast consumed heat energy
$hh_{DEMAND}$: Forecast consumed heat energy forecast by the energy forecaster
$MG_{HH-DEMAND}$: Margin of the forecast consumed heat energy

The presentation unit 57 may display information representing the margins determined by the margin determining unit 563 on a screen (margin setting screen) for setting the margins (step S102). An operator (manager) managing the device operation setting value determination apparatus 56a may correct a margin via the margin setting screen.

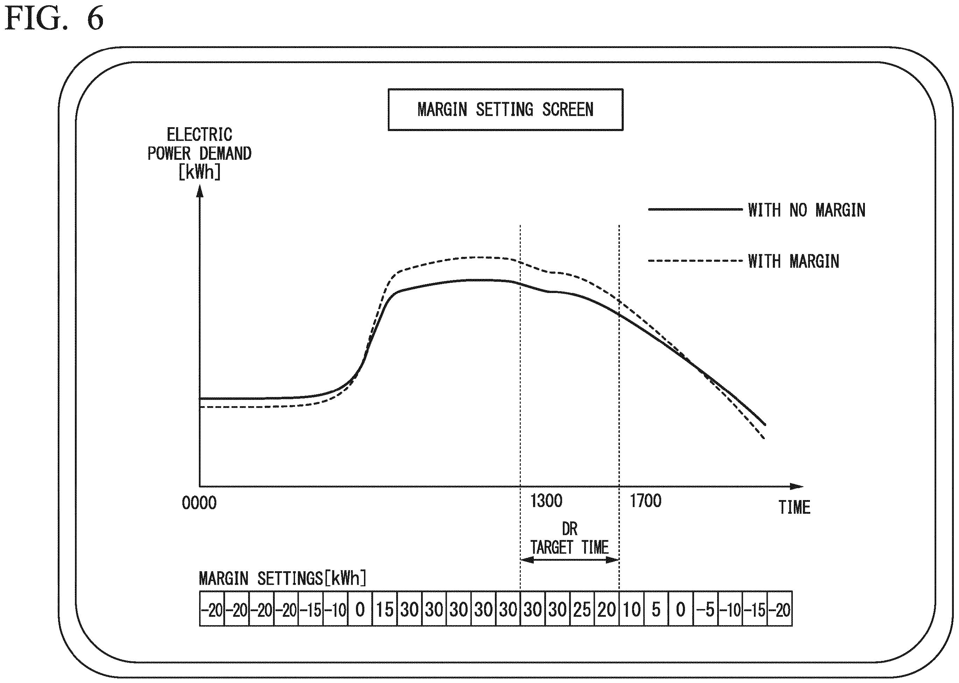

FIG. 6 shows the margin setting screen in the first embodiment. The determined margins may be either positive or negative values. For example, the forecast consumed electrical energy is expressed by Equation (6), based on the average past forecast consumed electrical energy and the past forecast error.

[Equation 6]

$$MG_{E-DEMAND}{}^{t} = ERR_{E\_DEMAND}{}^{t} \times \frac{e_{DEMAND\_OLD}{}^{t}}{e_{DEMAND}{}^{t}} \qquad \cdots (6)$$

$ERR_{E-DEMAND}{}^{t}$: Past forecast error average value at time t
$e_{DEMAND\_OLD}{}^{t}$: Average of the past forecast consumed electrical energy at time t

The schedule determination unit 564, based on the margin of the energy amount consumed by or supplied to the controlled device 2, calculates the energy amount consumed by or supplied to the controlled device 2. The schedule determination unit 564, based on the forecast value of the energy amount consumed by or supplied to the controlled device 2 and the margin thereof, optimizes the operation schedule of the controlled device 2 (step S103).

The objective function representing the evaluation index is expressed as Equation (7). If the objective function is minimized, the operation schedule is optimized. Examples of a constraining conditions are expressed by Equation (8) to (13). Equations (8) to (11) express the energy flow shown in FIG. 2. Equation (12) expresses the maximum heat storage amount and maximum heat discharge amount of the heat storage tank 25. Equation (13) expresses the maximum charge amount and the maximum discharge amount of the storage battery 20. In Equations (7) to (13), the superscript t on variables and the like indicates time.

[Equation 7]

$$\sum_{t=1}^{24}\left[X1^t \cdot E_C{}^t + GAS^t \cdot GAS_C\right] \Rightarrow \min \qquad \cdots (7)$$

$E_C$: Electric power coefficient
$GAS$: Amount of gas used
$GAS_C$: Gas coefficient

[Equation 8]

$$X1^t + E_{CGS} \cdot X6^t + E_{PV} + \left(X8^t - X8^{t+1}\right) = \frac{H_R}{COP_R} \cdot X5^t + E_{DEMAND}{}^t \qquad \cdots (8)$$

$E_{CGS}$: CGS rated electricity generation
$E_{PV}$: Forecast PV electricity generation
$H_R$: Electric freezer rated refrigeration amount
$COP_R$: Electric freezer COP
$E_{DEMAND}$: Forecast consumed electrical energy

[Equation 9]

$$GAS^t = GAS_{CGS} \cdot X6^t + GAS_{ABR-CG} \cdot X3^t + GAS_{ABR-HG} \cdot X4^t \qquad \cdots (9)$$

$H_{ABR-CG}$: Absorption-type water heater/cooler rated used gas amount (when making cold water)
$H_{ABR-HG}$: Absorption-type water heater/cooler rated used gas amount (when making hot water)

[Equation 10]

$$H_{ABR-CH} \cdot X2^t + H_{ABR-CG} \cdot X3^t + H_R \cdot X5^t + \left(X7^t - X7^{t+1}\right) = HC_{DEMAND}{}^t \qquad \cdots (10)$$

$H_{ABR-CH}$: Absorption-type water heater/cooler rated refrigeration amount (when making cold water, intaking exhausted heat)
$H_{ABR-CG}$: Absorption-type water heater/cooler rated refrigeration amount (when making cold water, using gas)
$HC_{DEMAND}$: Forecast consumed cold energy

[Equation 11]

$$H_{CGS} \cdot X6^t + H_{ABR-HG} \cdot X4^t > H_{ABR-IN} \cdot X2^t + HH_{DEMAND}^t$$
$$\cdots (1\,1)$$

$H_{ABR-HG}$: Absorption-type water heater/cooler rated heating amount (when making hot water, using gas)
$H_{ABR-IN}$: Absorption-type water heater/cooler rated exhaust heat intake amount
$HH_{DEMAND}$: Forecast consumed heat energy

[Equation 12]

$$\left| X7^t - X7^{t+1} \right| \le FL_{Hs} \qquad \cdots (1\,2)$$

$FL_{Hs}$: Maximum storage (discharge) heat amount of heat storage tank
[Equation 13]

$$\left| X8^t - X8^{t+1} \right| \le FL_{Bat} \qquad \cdots (1\,3)$$

$FL_{Bat}$: Maximum charge (discharge) energy amount of storage battery

The schedule determination unit 564, by using Equations (8) to (13) to determine the variables X1 to X8 that minimize Equation (7), can optimize the determined operation schedule.

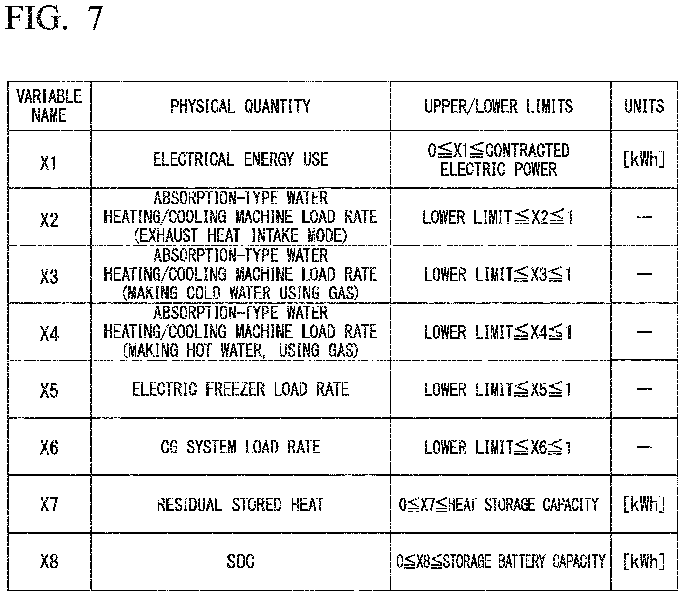

FIG. 7 shows the variables to be optimized. The variable X1 indicates the electrical energy used. The variables X2 to X6 indicate the load rates of the various devices included in the controlled devices 2. The variable X7 indicates the residual heat storage amount of the heat storage tank 25. The variable X8 indicates the residual energy (SOC: state of charge) of the storage battery 20. The variables X7 and X8 at time t =0, indicate the setting values that establish the initial conditions for the optimization processing using the variables X1 to X6.

The electric power coefficient $E_C$ and gas coefficient $GAS_C$ shown in Equation (7) are different, depending upon the evaluation index to be minimized. For example, if the cost is to be minimized, the electric power coefficient $E_C$ is the electricity fee unit price. If the cost is to be minimized, the gas coefficient $GAS_C$ is the gas fee unit amount.

Also, for example, if the amount of carbon dioxide emission is to be minimized, the electric power coefficient $E_C$ is a coefficient that is established by the amount of carbon dioxide exhausted in response to electric power consumed or supplied. If the carbon dioxide emission is to be minimized, the gas coefficient $GAS_C$ is a coefficient that is established by the amount of carbon dioxide exhausted in response to the gas consumed or supplied.

The schedule determination unit 564 calculates values of variables that satisfy Equations (8) to (13) and other constraining conditions and that also minimize the objective function representing the evaluation index, using mathematical programming or simulation.

The schedule determination unit 564 optimizes the operation schedule, taking the demand response incentive amount into consideration. If the evaluation index is cost, the schedule determination unit 564 changes the electric power coefficient $E_C^t$ (yen/kWh) to be as shown in FIG. 14. The schedule determination unit 564 takes the upper limit of the electrical energy used amount X1 to be the same as the baseline.

In Equation (14), $E_{CHG}^t$ indicates the metered fee amount at the time t. INC (yen/kWh) indicates the incentive unit amount. That is, in Equation (14), the incentive unit amount INC is added to the electricity fee.
[Equation 14]

$$E_C^t = E_{CHG}^t + INC \qquad \cdots (1\,4)$$

The change unit 565 changes the incentive unit amount INC (step S104)

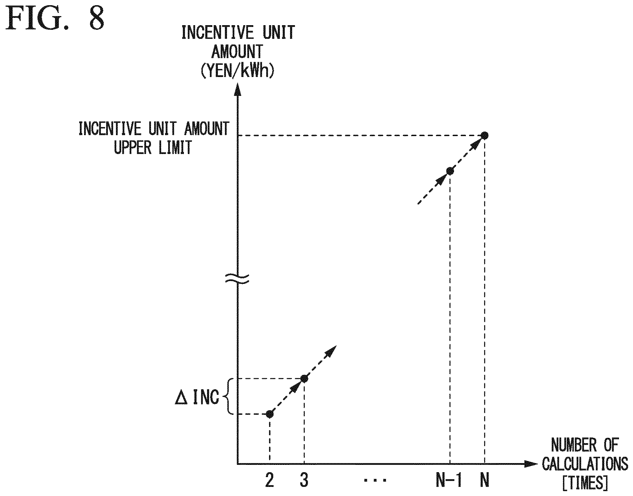

FIG. 8 shows the change of the incentive unit amount in the first embodiment. The change unit 565, based on a pre-established rule, calculates the incentive unit amount. For example, the change unit 565 increases the incentive unit amount by a pre-established increment of ΔINC.

The schedule determination unit 564 determines whether or not the incentive unit amount does not exceed the upper limit (step S105). If the incentive unit amount does not exceed the upper limit (YES at step S105), the schedule determination unit 564 executes the processing to optimize the operation schedule (iterative computation). The schedule determination unit 564 determines the bidding conditions with which the consumer is not expected to incur a loss, based on the re-execution of the optimization processing. The change unit 565 returns the processing to step S104.

If the incentive unit amount is not at or below the upper limit (NO at step S105), the presentation unit 57 displays a screen (bidding conditions verification screen) for verifying the bidding conditions. This notifies the person deciding the bidding conditions of bidding conditions for which it is expected that the consumer will not incur a loss (step S106). The person deciding the bidding conditions, for example, is an operator (manager) managing the device operation setting value determination apparatus 56a.

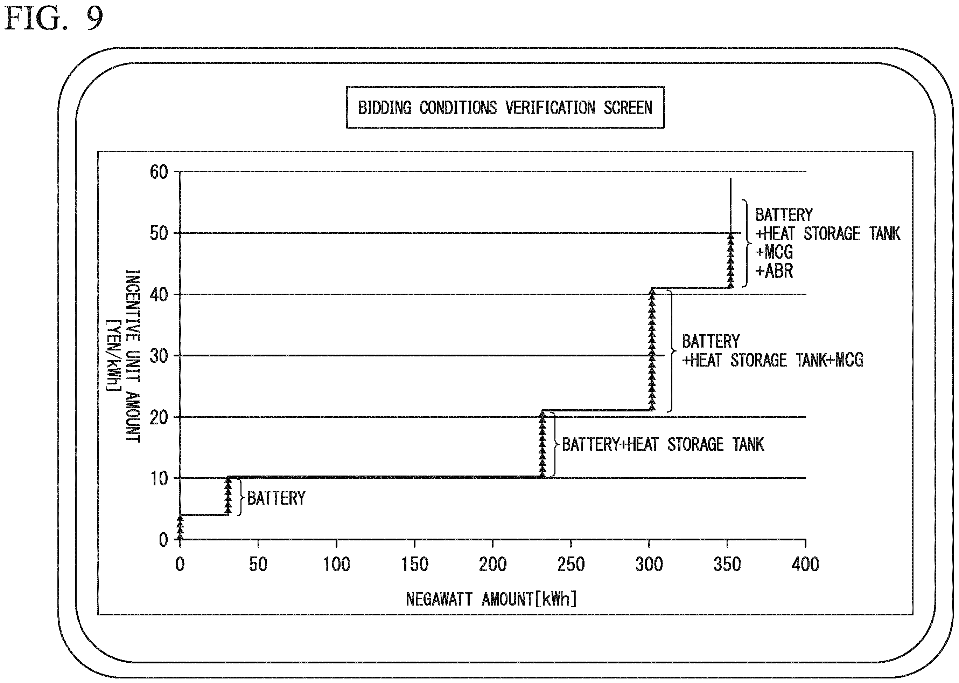

FIG. 9 shows the screen (bidding conditions verification screen) for verifying the bidding conditions, in which the vertical axis represents the incentive unit amount, and the horizontal axis represents the negawatt amount. The solid curve in the graph represents the result of re-executing the optimization processing. In the range of the solid curve in this graph to which hatching is applied, the optimized operation schedule has a lower cost for electricity and gas than the operation schedule that is not optimized. Therefore, as long as the bidding condition is within the range of the hatched part of the solid line in the graph, it is expected that the consumer will not incur a loss.

The final amount at the previous time in the negawatt market may be displayed on the bidding conditions verification screen. The storage battery, the heat storage tank, and micro-cogeneration (MCG), and the absorption-type water heating/cooling machine (ABR) may be displayed on the bidding conditions verification screen as the controlled devices 2 that are utilized to save electric power.

As noted above, the device operation setting value determination apparatus 56a of the first embodiment has a forecaster 562, a margin determining unit 563, and a schedule determination unit 564. The forecaster 562 forecasts the energy amount consumed by or supplied to the controlled device 2. The margin determining unit 563 determines a margin for making a negawatt amount bid. The schedule determination unit 564 determines setting values that establish operation of the controlled device 2, based on energy characteristics of the controlled device 2 and the incentive unit amount in a demand response.

By this constitution, the margin determining unit 563 determines the margin for making a negawatt amount bid. This enables the device operation setting value determination apparatus 56a to improve the probability of achieving a negawatt amount that that was bid in a negawatt transaction.

The margin determining unit 563 of the first embodiment determines the margin of the forecast value of the energy amount consumed by or supplied to the controlled device 2 as the margin for making a negawatt amount bid. The margin determining unit 563 appends the determined margin to the forecast value of the energy amount consumed by or supplied to the controlled device 2. The schedule determination unit 564 determines the setting values that establish operation of the controlled device 2, based on energy characteristics of the controlled device 2 and the incentive unit amount in a demand response.

That is, the device operation setting value determination apparatus 56a of the first embodiment considers the margin in the energy amount consumed by or supplied to the controlled device 2. The device operation setting value determination apparatus 56a of the first embodiment optimizes the operation schedule of the controlled device 2, based on an energy amount that considers the margin. This enables the device operation setting value determination apparatus 56a to make a bid of a negawatt amount that can be achieved, even if a situation occurs that was not envisioned at the time of bidding the negawatt amount (for example, an increase in the electric power demand). The consumer can receive an incentive that was envisioned at the time of bidding the negawatt amount.

The device operation setting value determination apparatus 56a of the first embodiment can improve the probability of the amount of electric power that becomes surplus by savings by a consumer achieves the negawatt amount that was bid, even if the received electric power amount exceeds expectations at the time of a demand response. Because the consumer can receive an incentive, the device operation setting value determination apparatus 56a of the first embodiment can expand the profit of the consumer.

The device operation setting value determination apparatus 56a of the first embodiment may determine a plurality of margins, in accordance with the request level of the demand response.

The device operation setting value determination apparatus 56a has a change unit 565. The change unit 565 changes the incentive unit amount, based on a pre-established rule. The schedule determination unit 564 updates the operation schedule of the controlled device 2 based on the change incentive unit amount.

(Second Embodiment)

In the second embodiment, the margin determining unit 563 determining the margin of setting values that establish operation of the controlled device 2 is different from the first embodiment. In the second embodiment, only the points of difference from the first embodiment will be described.

The margin determining unit 563 appends a margin to the setting values that establish operation of the controlled device 2. The schedule determination unit 564 optimizes the operation schedule of the controlled device 2 so as to provide a limit on the operation of the controlled device 2, based on the setting values to which a margin was appended.

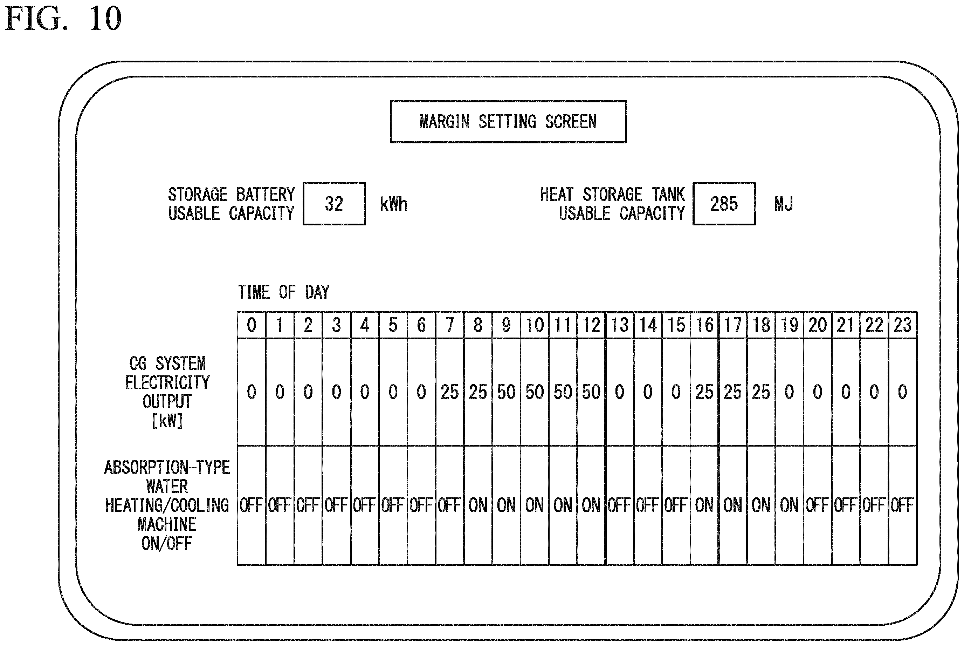

FIG. 10 shows the margin setting screen in the second embodiment. The operator of the device operation setting value determination apparatus 56a can, via the margin setting screen, for example, set as 60 kWh the amount of usable capacity of the storage battery 20 that has a total capacity of 100 kWh.

The margin determining unit 563 appends margins to the usable capacities of the storage battery 20 and the heat storage tank 25. The schedule determination unit 564 determines the operation schedule of the controlled devices 2, including the storage battery 20, limiting the usable capacity of the storage battery 20 to 60 kWh. The schedule determination unit 564 calculates the negawatt amount in the case of executing this determined operation schedule. If the schedule determination unit 564 determines that it is difficult to achieve the negawatt amount that has been bid, it uses the 40 kWh capacity that remains when the usable capacity of 60 kWh is subtracted from the overall capacity of 100 kWh, which is caused to be discharged from the storage battery 20. This enables the device operation setting value determination apparatus 56a to improve the probability of achieving the negawatt amount. The same applies to the heat storage tank 25.

The margin determining unit 563, for example, may append a margin to the upper limit of the electric power output by the CG system 22. The operator of the device operation setting value determination apparatus 56a can, via the margin setting screen, for example, set the upper limit of the electric power output during the DR target time to 30 kW regarding the CG system 22 that has a rated electricity output of 50 kW. The margin determining unit 563 appends a margin to the upper limit of the electric power output by the CG system 22.

The schedule determination unit 564 determines the operation schedule of the controlled devices 2, including the CG system 22, limiting the upper limit of the electric power output by the CG system 22 to 30 kW. The schedule determination unit 564 calculates the negawatt amount if the determined schedule is executed. If the schedule determination unit 564 determines that it is difficult to achieve the negawatt amount that has been bid, it uses the 20 kWh capacity that remains when the usable capacity of 30 kWh is subtracted from the rated electricity output of 50 kWh, this being caused to be output from the CG system 22. This enables the device operation setting value determination apparatus 56a to improve the probability of achieving the negawatt amount.

The margin determining unit 563 may, for example, append a margin to the starting and stopping of operation of a non-electrical heat-sourcing device, such as an absorption-type water heating/cooling machine 24. This margin may be expressed, for example, as an on or off starting time and stopping time. The operator of the device operation setting value determination apparatus 56a can for example, via the margin setting screen, set the operation of the non-electrical heat-sourcing device to stopped. The margin determining unit 563 appends a margin to the setting value that establishes operation of the non-electrical heat-sourcing device.

The schedule determination unit 564, for example, determines an operation schedule that sets the operation of the non-electrical heat-sourcing device of the controlled devices 2 to stopped (off) and also sets the operation of an electrical heat-sourcing device of the controlled devices 2 to operating (on) during the DR target time. The schedule determination unit 564 calculates the negawatt amount in the case of executing this determined operation schedule. The operator of the device operation setting value determination apparatus 56a bids the negawatt amount that was calculated. The schedule determination unit 564 determines whether or not it is difficult to achieve the bid negawatt amount if the controlled devices 2 are actually operating based on the determined schedule. If the determination is made that achieving the bid negawatt amount is difficult, the schedule determination unit 564 causes the non-electrical heat-sourcing device to operate (turn on) and also stops (sets to off) the electrical heat-sourcing device, thereby reducing the received electrical energy amount of the controlled devices 2. This enables the device operation setting value determination apparatus 56a to improve the probability of achieving the negawatt amount.

Of the appending of a margin to the usable capacities of the storage battery 20 and the heat storage tank 25, the appending of a margin to the upper limit of the electric power output by the CG system 22, and the appending of a margin to the starting and stopping of a non-electrical heat-sourcing device, which one is to be executed by the margin determining unit 563 may be determined by a person who decides the bidding conditions in a negawatt transaction. The person who decides the bidding conditions in a negawatt transaction may decide which the margin determining unit 563 is to execute, giving consideration to the risk of failure of the controlled devices 2.

As noted above the device operation setting value determination apparatus 56a of the second embodiment has a forecaster 562, a margin determining unit 563, and a schedule determination unit 564. The forecaster 562 forecasts the energy amount consumed by or supplied to controlled devices 2. The margin determining unit 563 determines a margin of a value representing energy characteristics of the controlled devices 2 as the margin for bidding a negawatt amount. The margin determining unit 563 appends the determined margin to the value representing energy characteristics of controlled devices 2. The schedule determination unit 564 determines setting values that establish operation of the controlled devices 2, based on the forecast value of the energy amount, a value representing energy characteristics of a device to which a margin has been appended, and the incentive unit amount in a demand response.

The margin determining unit 563 of the second embodiment may determine the margin of the usable capacity of the storage battery 20 or the heat storage tank 25 as a margin of the setting value that establishes operation. The margin determining unit 563 may determine the margin of the upper limit of the output of an electrical generator such as the CG system 22 as the margin of a value that establishes operation. The margin determining unit 563 of the second embodiment may determine the margin of the setting value of the operation and stopping of a non-electrical heat-sourcing device as a margin of a setting value that establishes operation.

If the operation schedule is to be optimized, the device operation setting value determination apparatus 56a of the second embodiment limits the operation of devices that are the targets of optimization, so that there is equivalence with the appending of a margin to the negawatt amount. This enables the device operation setting value determination apparatus 56a to assure the bid negawatt amount, even if the actual electric power demand (consumption amount) increases. The consumer can receive a pre-established incentive.

(Third Embodiment)

In the third embodiment, the insertion of the margin determining unit 563 at a stage after the processing flow with respect to the change unit 565 is different from the second embodiment. In the third embodiment, only points of difference from the second embodiment will be described.

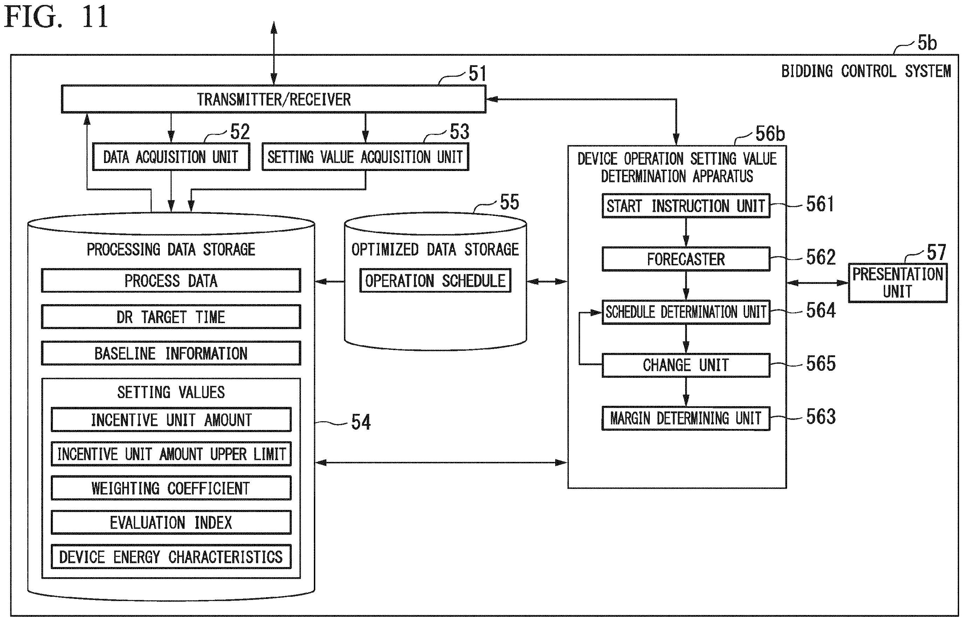

FIG. 11 shows the bidding control system 5b in the third embodiment. The bidding control system 5b has a transmitter/receiver 51, a data acquisition unit 52, a setting value acquisition unit 53, a processing data storage 54, an optimized data storage 55, a device operation setting value determining device 56b, and a presentation unit 57.

The device operation setting value determination apparatus 56b has a start instruction unit 561, a forecaster 562, a margin determining unit 563, a schedule determination unit 564, and a change unit 565. In the third embodiment, the margin determining unit 563 is inserted after the processing flow with respect to the change unit 565.

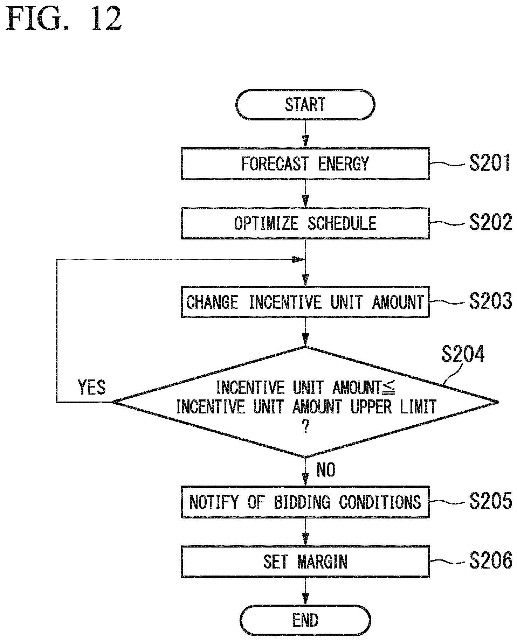

FIG. 12 shows the operation of the device operation setting value determination apparatus 56b in the third embodiment. At a pre-established timing, the start instruction unit 561 outputs a trigger signal that instructs starting to the forecaster 562. The start instruction unit 561, for example, outputs the trigger signal to the forecaster 562 at 2100 on the day before executing the operation schedule. The operation shown in FIG. 112 is execution at this timing. Step S101 is the same as step S101 shown in FIG. 5. Steps S202 to S205 are the same as steps S103 to S106 shown in FIG. 5.

The margin determining unit 563 acquires information representing a setting value that establishes operation determined by the schedule determination unit 564, via the change unit 565. The margin determining unit 563 determines the margin of the setting value that establishes operation (step S206). The controlled device 2 operates based on the setting value that establishes operation to which the margin has been appended.

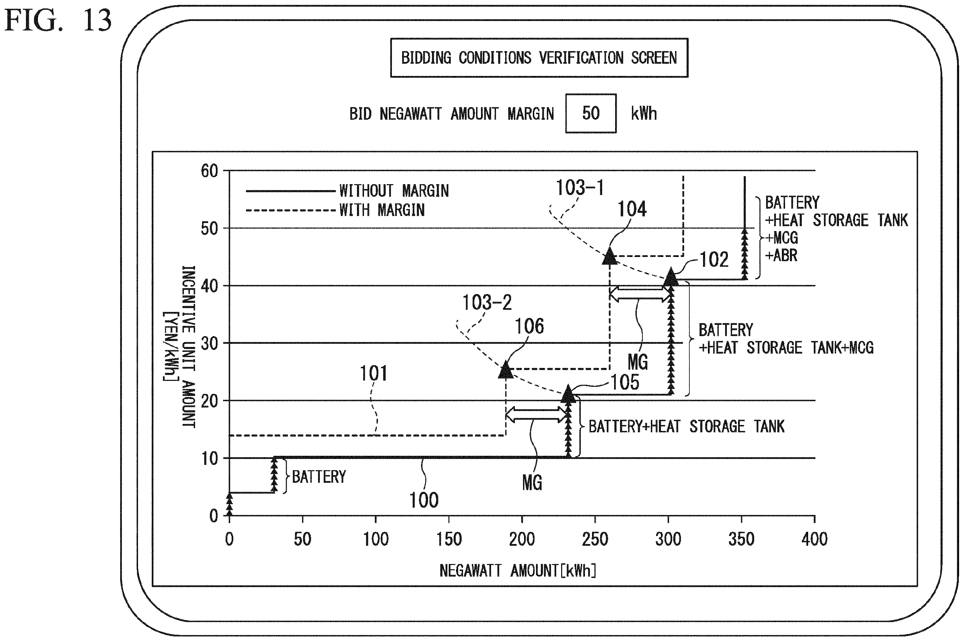

FIG. 13 shows a screen for verifying the bidding conditions (bidding conditions verification screen) in the third embodiment. The operator (manager) who manages the device operation setting value determination apparatus 56a can refer to the bidding conditions verification screen to verify the relationship between the incentive unit amount if a margin is appended and the negawatt amount. The operator who manages the device operation setting value determination apparatus 56a can set a margin to the bid negawatt amount, via the bidding conditions verification screen. Notification of the set margin is made to the margin determining unit 563. The set margin may overwrite the margin determined by the margin determining unit 563.

The bidding condition group 100 has a plurality of bidding conditions in the case of a margin not being appended.

The bidding condition group 101 has a plurality of bidding conditions in the case of a margin being appended. The negawatt amount margin is represented by the length of the arrow MG.

The optimized bidding point 102 is on the solid line representing the bidding condition group 100. The optimum bidding point 104 is a new optimized bidding point in the case in which a margin is appended in the optimized bidding point 102. The optimized bidding point 104 is on the broken line representing the bidding condition group 101. The equal evaluation index curve 103-1 is a curve that connects incentive unit amounts for which the evaluation indexes indicated by Equation (7) are equal, for the case of executing the same operation schedule. The optimized bidding point 102 and the optimized bidding point 104 are on the equal evaluation index curve 103-1.

The optimized bidding point 105 is on the solid line representing the bidding condition group 100. The optimized bidding point 106 is a new optimized bidding point in the case in which a margin was appended to the optimized bidding point 102. The optimized bidding point 106 is on the broken line representing the bidding condition group 101. The equal evaluation index curve 103-2 is a curve that connects incentive unit amounts for which the evaluation indexes indicated by Equation (7) are equal, for the case of executing the same operation schedule. The optimized bidding points 105 and the optimized bidding point 106 are on the equal evaluation index curve 103-2.

The incentive unit amounts of the new optimized bidding points for the case in which a margin is appended are represented by Equation (15).

[Equation 15]

$$INC_{NEW} = \frac{Ne}{Ne - MGN} \times INC_{OLD} \qquad \cdots (15)$$

$INC_{NEW}$: Incentive unit amount of an optimized bidding point that encompasses a margin
$INC_{OLD}$: Incentive unit amount of the original optimized bidding point
Ne: Negawatt amount of the original optimized bidding point
MGN: Bid negawatt amount margin

The operator who manages the device operation setting value determination apparatus 56a can set the margin of the negawatt amount to be bid via the bidding conditions verification screen. The operator who manages the device operation setting value determination apparatus 56a can visually verify the bidding conditions to which a margin has been appended.

As noted above, the device operation setting value determination apparatus 56b if the third embodiment has a forecaster 562, a schedule determination unit 564, and a margin determining unit 563. The forecaster 562 forecasts the energy amount consumed by or supplied to the controlled devices 2. The schedule determination unit 564, based on the forecast value of the energy amount, energy characteristics of the controlled devices 2, and the incentive unit amount in a demand response, determines the setting values that establish operation of the controlled devices 2. The margin determining unit 563 determines the margin of the setting value that establishes operation of the controlled devices 2 as the margin for bidding a negawatt amount. The margin determining unit 563 appends the determined margin to the setting value that establishes operation of the controlled device 2.

This enables the device operation setting value determination apparatus 56b to improve the probability of achieving the negawatt amount that had been bid.

The device operation setting value determination apparatus 56b of the third embodiment, by encompassing a margin into the negawatt amount to be bid, calculates an incentive unit amount that just compensates the reduced incentive income. The operator can visually verify the calculated incentive unit amount on a screen.

The device operation setting value determination apparatus 56b of the third embodiment can make a proper negawatt amount bid that considers the margin. The device operation setting value determination apparatus 56b of the third embodiment can assure the negawatt amount that was bid, even if a situation occurs that was not envisioned at the time of bidding (for example, an increase in the electric power demand). The consumer can receive an incentive that was envisioned at the time of bidding the negawatt amount.

According to at least one of the above-described embodiments, by having a margin determining unit 563 that determines a margin for making a negawatt amount bid, it is possible to improve the probability of achieving the negawatt amount that was bid.

While certain embodiments of the present inventions have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

**Claims**

1. A device operation setting value determination apparatus comprising:

   a forecaster that forecasts an energy amount consumed by or supplied to a device;
   a margin determining unit that determines a margin of the forecast value of the energy amount as a margin for making a negawatt amount bid and that appends the determined margin to the forecast value of the energy amount; and
   a schedule determining unit that determines a setting value establishing the operation of the device, based on the forecast value of the energy amount to which the margin has been appended, energy characteristics of the device, and an incentive unit amount in a demand response.

2. A device operation setting value determination apparatus comprising:

   a forecaster that forecasts an energy amount consumed by or supplied to a device;
   a margin determining unit that determines a margin of a value representing energy characteristics of the device as a margin for making a negawatt amount bid and that appends the determined margin to the value representing energy characteristics of the device; and
   a schedule determining unit that determines a setting value establishing operation of the device, based on the forecast value of the energy amount, the value representing energy characteristics of the device to which the margin has been appended, and an incentive unit amount in a demand response.

3. The device operation setting value determination apparatus according to claim 2, wherein the margin determining unit determines a margin of the usable capacity of a storage battery or heat storage tank as a margin of the value that represents energy characteristics of the device.

4. The device operation setting value determination apparatus according to claim 2, wherein the margin determining unit determines a margin of the upper limit of the output of an electric generator as the margin of a value that represents energy characteristics of the device.

5. The device operation setting value determination apparatus according to claim 2, wherein the margin determining unit determines a margin of a setting value of operating or stopping a non-electrical heat-sourcing device as a margin of the value that represents the energy characteristics of the device.

6. A device operation setting value determination apparatus comprising:

   a forecaster that forecasts an energy amount consumed by or supplied to a device;
   a schedule determining unit that determines a setting value establishing operation of the device, based on the forecast value of the energy amount, energy characteristics of the device, and an incentive unit amount in a demand response; and
   a margin determining unit that determines a margin of the setting value establishing operation of the device as a margin for making a negawatt amount bid and that appends the determined margin to the setting value establishing operation of the device.

7. The device operation setting value determination apparatus according to claim 1, wherein the margin determining unit determines a plurality of margins in accordance with a requested level of a demand response.

8. The device operation setting value determination apparatus according to claim 1, further comprising:

   a change unit that changes the incentive unit amount based on a pre-established rule,
   wherein the schedule determining unit determines operation of the device, based on the changed incentive unit amount.

9. The device operation setting value determination apparatus according to claim 1, further comprising:

   a presentation unit that presents the incentive unit amount.

10. A device operation setting value determination method in a device operation setting value determination apparatus, the method including:

    forecasting an energy amount consumed by or supplied to a device;
    determining a margin of the forecast value of the energy amount as a margin for making a negawatt amount bid and of appending the determined margin to the forecast value of the energy amount; and
    determining a setting value that establishes operation of the device, based on the forecast value of the energy amount to which the margin has been appended, energy characteristics of the device, and an incentive unit amount in a demand response.

11. A non-transitory storage medium into which is stored a device operation setting value determination program for causing a computer to execute:

    forecasting an energy amount consumed by or supplied to a device;
    determining a margin of the forecast value of the energy amount as a margin for making a negawatt amount bid and of appending the determined margin to the forecast value of the energy amount; and
    determining a setting value that establishes operation of the device, based on the forecast value of the energy amount to which the margin has been appended, energy characteristics of the device, and an incentive unit amount in a demand response.

# FIG. 1

FIG. 2

Legend:
- COLD WATER
- HOT WATER
- ELECTRICITY
- GAS

2

20 STORAGE BATTERY
21 PV
E1 POWER RECEIVER
G1 GAS SUPPLIER
22 CG SYSTEM
23 ELECTRIC FREEZER
24 ABSORPTION-TYPE WATER HEATING/COOLING MACHINE
25 HEAT STORAGE TANK
26 AIR-CONDITIONER
27 ROOM

EP 3 193 304 A1

# FIG. 3

BIDDING CONTROL SYSTEM — 5a

TRANSMITTER/RECEIVER — 51

DATA ACQUISITION UNIT — 52

SETTING VALUE ACQUISITION UNIT — 53

DEVICE OPERATION SETTING VALUE DETERMINATION APPARATUS — 56a

START INSTRUCTION UNIT — 561

FORECASTER — 562

MARGIN DETERMINING UNIT — 563

SCHEDULE DETERMINATION UNIT — 564

CHANGE UNIT — 565

PRESENTATION UNIT — 57

PROCESSING DATA STORAGE — 54

PROCESS DATA

DR TARGET TIME

BASELINE INFORMATION

SETTING VALUES

INCENTIVE UNIT AMOUNT

INCENTIVE UNIT AMOUNT UPPER LIMIT

WEIGHTING COEFFICIENT

EVALUATION INDEX

DEVICE ENERGY CHARACTERISTICS

OPTIMIZED DATA STORAGE — 55

OPERATION SCHEDULE

EP 3 193 304 A1

FIG. 4

EP 3 193 304 A1

FIG. 5

```
                    ┌──────────────┐
                    │    START     │
                    └──────┬───────┘
                           ↓
              ┌────────────────────────┐
              │    FORECAST ENERGY     │ ～S101
              └────────────┬───────────┘
                           ↓
              ┌────────────────────────┐
              │      SET MARGIN        │ ～S102
              └────────────┬───────────┘
                           ↓
              ┌────────────────────────┐
              │   OPTIMIZE SCHEDULE    │ ～S103
              └────────────┬───────────┘
                           ↓
              ┌────────────────────────┐
        ┌────→│ CHANGE INCENTIVE UNIT AMOUNT │ ～S104
        │     └────────────┬───────────┘
        │                  ↓                      S105
        │          ╱────────────────╲
        │ YES     ╱  INCENTIVE UNIT   ╲
        └────────╱   AMOUNT ≦ INCENTIVE ╲
                 ╲ UNIT AMOUNT UPPER    ╱
                  ╲    LIMIT  ?        ╱
                   ╲────────┬─────────╱
                            ↓ NO
              ┌────────────────────────┐
              │ NOTIFY OF BIDDING CONDITIONS │ ～S106
              └────────────┬───────────┘
                           ↓
                    ┌──────────────┐
                    │     END      │
                    └──────────────┘
```

# FIG. 6

MARGIN SETTING SCREEN

ELECTRIC POWER DEMAND [kWh]

——— WITH NO MARGIN

- - - - - - WITH MARGIN

0000          1300     1700     TIME

DR TARGET TIME

MARGIN SETTINGS[kWh]

| -20 | -20 | -20 | -20 | -15 | -10 | 0 | 15 | 30 | 30 | 30 | 30 | 30 | 30 | 30 | 25 | 20 | 10 | 5 | 0 | -5 | -10 | -15 | -20 |
|---|---|---|---|---|---|---|---|---|---|---|---|---|---|---|---|---|---|---|---|---|---|---|---|

# FIG. 7

| VARIABLE NAME | PHYSICAL QUANTITY | UPPER/LOWER LIMITS | UNITS |
|---|---|---|---|
| X1 | ELECTRICAL ENERGY USE | $0 \leqq X1 \leqq$ CONTRACTED ELECTRIC POWER | [kWh] |
| X2 | ABSORPTION-TYPE WATER HEATING/COOLING MACHINE LOAD RATE (EXHAUST HEAT INTAKE MODE) | LOWER LIMIT $\leqq X2 \leqq 1$ | — |
| X3 | ABSORPTION-TYPE WATER HEATING/COOLING MACHINE LOAD RATE (MAKING COLD WATER USING GAS) | LOWER LIMIT $\leqq X3 \leqq 1$ | — |
| X4 | ABSORPTION-TYPE WATER HEATING/COOLING MACHINE LOAD RATE (MAKING HOT WATER, USING GAS) | LOWER LIMIT $\leqq X4 \leqq 1$ | — |
| X5 | ELECTRIC FREEZER LOAD RATE | LOWER LIMIT $\leqq X5 \leqq 1$ | — |
| X6 | CG SYSTEM LOAD RATE | LOWER LIMIT $\leqq X6 \leqq 1$ | — |
| X7 | RESIDUAL STORED HEAT | $0 \leqq X7 \leqq$ HEAT STORAGE CAPACITY | [kWh] |
| X8 | SOC | $0 \leqq X8 \leqq$ STORAGE BATTERY CAPACITY | [kWh] |

# FIG. 8

INCENTIVE UNIT AMOUNT (YEN/kWh)

INCENTIVE UNIT AMOUNT UPPER LIMIT

$\Delta$ INC

NUMBER OF CALCULATIONS [TIMES]

2    3    ...    N−1    N

# FIG. 9

BIDDING CONDITIONS VERIFICATION SCREEN

BATTERY +HEAT STORAGE TANK +MCG +ABR

BATTERY +HEAT STORAGE TANK+MCG

BATTERY+HEAT STORAGE TANK

BATTERY

INCENTIVE UNIT AMOUNT [YEN/kWh]

NEGAWATT AMOUNT[kWh]

# FIG. 10

MARGIN SETTING SCREEN

STORAGE BATTERY USABLE CAPACITY  32  kWh

HEAT STORAGE TANK USABLE CAPACITY  285  MJ

TIME OF DAY

| | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 |
|---|---|---|---|---|---|---|---|---|---|---|---|---|---|---|---|---|---|---|---|---|---|---|---|---|
| CG SYSTEM ELECTRICITY OUTPUT [kW] | 0 | 0 | 0 | 0 | 0 | 0 | 0 | 25 | 25 | 50 | 50 | 50 | 50 | 0 | 0 | 0 | 25 | 25 | 25 | 0 | 0 | 0 | 0 | 0 |
| ABSORPTION-TYPE WATER HEATING/COOLING MACHINE ON/OFF | OFF | OFF | OFF | OFF | OFF | OFF | OFF | OFF | ON | ON | ON | ON | ON | OFF | OFF | OFF | ON | ON | ON | ON | OFF | OFF | OFF | OFF |

FIG. 11

EP 3 193 304 A1

FIG. 12

```
                    ┌─────────────┐
                    │    START    │
                    └──────┬──────┘
                           ↓
           ┌──────────────────────────────┐
           │      FORECAST  ENERGY         │─── S201
           └──────────────┬───────────────┘
                          ↓
           ┌──────────────────────────────┐
           │     OPTIMIZE  SCHEDULE        │─── S202
           └──────────────┬───────────────┘
                          ↓
           ┌──────────────────────────────┐
    ┌─────→│ CHANGE  INCENTIVE  UNIT  AMOUNT│─── S203
    │      └──────────────┬───────────────┘
    │                     ↓                        S204
    │              ╱──────────────────╲
    │ YES         ╱  INCENTIVE UNIT AMOUNT≦ ╲
    └────────────╱ INCENTIVE UNIT AMOUNT UPPER LIMIT ╲
                 ╲           ?             ╱
                  ╲─────────────────────╱
                          ↓ NO
           ┌──────────────────────────────┐
           │  NOTIFY  OF  BIDDING  CONDITIONS│─── S205
           └──────────────┬───────────────┘
                          ↓
           ┌──────────────────────────────┐
           │        SET  MARGIN            │─── S206
           └──────────────┬───────────────┘
                          ↓
                   ┌─────────────┐
                   │     END     │
                   └─────────────┘
```

FIG. 13

BIDDING CONDITIONS VERIFICATION SCREEN

BID NEGAWATT AMOUNT MARGIN  50  kWh

## INTERNATIONAL SEARCH REPORT

| | International application No. |
|---|---|
| | PCT/JP2015/069116 |

**A. CLASSIFICATION OF SUBJECT MATTER**
*G06Q50/06(2012.01)i, H02J3/32(2006.01)i*

According to International Patent Classification (IPC) or to both national classification and IPC

**B. FIELDS SEARCHED**

Minimum documentation searched (classification system followed by classification symbols)
G06Q10/00-50/34, H02J3/32

Documentation searched other than minimum documentation to the extent that such documents are included in the fields searched
Jitsuyo Shinan Koho        1922-1996   Jitsuyo Shinan Toroku Koho   1996-2015
Kokai Jitsuyo Shinan Koho  1971-2015   Toroku Jitsuyo Shinan Koho   1994-2015

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2014/132370 A1  (Hitachi, Ltd.),<br>04 September 2014 (04.09.2014),<br>paragraphs [0110] to [0120]<br>(Family: none) | 1-11 |
| A | WO 2014/132371 A1  (Hitachi, Ltd.),<br>04 September 2014 (04.09.2014),<br>paragraph [0051]<br>(Family: none) | 1-11 |
| A | JP 2014-164729 A  (Hitachi, Ltd.),<br>08 September 2014 (08.09.2014),<br>entire text; all drawings<br>(Family: none) | 1-11 |

☐ Further documents are listed in the continuation of Box C.       ☐ See patent family annex.

| * | Special categories of cited documents: |
|---|---|
| "A" | document defining the general state of the art which is not considered   to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>    31 August 2015 (31.08.15) | Date of mailing of the international search report<br>    08 September 2015 (08.09.15) |
|---|---|
| Name and mailing address of the ISA/<br>    Japan Patent Office<br>    3-4-3,Kasumigaseki,Chiyoda-ku,<br>    Tokyo 100-8915,Japan | Authorized officer<br><br><br>Telephone No. |

Form PCT/ISA/210 (second sheet) (July 2009)

**EP 3 193 304 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014009824 A